**Europäisches Patentamt**

**European Patent Office**

**Office européen des brevets**

(11) Veröffentlichungsnummer: **0 212 324**
**A2**

# (12) EUROPÄISCHE PATENTANMELDUNG

(21) Anmeldenummer: **86110224.2**

(22) Anmeldetag: **24.07.86**

(51) Int. Cl.⁴: **G01N 27/00**

(30) Priorität: **22.08.85 DE 3530082**

(43) Veröffentlichungstag der Anmeldung:
**04.03.87 Patentblatt 87/10**

(84) Benannte Vertragsstaaten:
**DE FR GB IT**

(71) Anmelder: **Micro-Epsilon Messtechnik GmbH & Co. Kommanditgesellschaft**
**Königbacher Strasse 15**
**D-8359 Ortenburg-Dorfbach(DE)**

(72) Erfinder: **Hrubes, Franz**
**Maierhof 102**
**D-8399 Rotthalmünster(DE)**

(74) Vertreter: **Klunker . Schmitt-Nilson . Hirsch**
**Winzererstrasse 106**
**D-8000 München 40(DE)**

(54) **Verfahren zum berührungslosen Vermessen elektrisch leitfähiger Objekte und Vorrichtung zur Durchführung des Verfahrens.**

(57) Es wird ein Verfahren zum berührungslosen Vermessen elektrisch leitfähiger Objekte innerhalb eines Meßraumes aufgezeigt, sowie eine Vorrichtung zur Durchführung des Verfahrens. Hierbei erzeugt man im Meßraum zwischen mindestens einem Sender und mindestens einem Empfänger ein zeitlich konstantes elektromagnetisches Wechselfeld, mißt die Feldstärke am Empfänger und speichert den Wert als Bezugswert. Daraufhin bringt man das zu vermessende Objekt in den Raum zwischen Sender und Empfänger ein, mißt die Feldstärke am Empfänger und vergleicht den erhaltenen Wert mit dem Bezugswert. Der Vergleichswert wird dann als Meßwert zur Anzeige gebracht. Vorzugsweise wird das Verfahren zum Erkennen und/oder Lokalisieren von Fehlerstellen bzw. Ungleichmäßigkeiten in der Stahlarmierung von Fördergurten verwendet oder zur Erkennung der (Kanten-)Lage eines flächigen Meßobjekts.

# Verfahren zum berührungslosen Vermessen elektrisch leitfähiger Objekte und Vorrichtung zur Durchführung des Verfahrens

Die Erfindung betrifft ein Verfahren zum berührungslosen Vermessen elektrisch leitfähiger Objekte innerhalb eines Meßraums, die Verwendung dieses Verfahrens, sowie eine Vorrichtung zur Durchführung des Verfahrens.

In der Industrie stellt sich oftmals das Problem, daß man auf einfache Weise Aussagen über ein elektrisch leitfähiges Objekt machen will, ohne dies dabei berühren oder optisch erfassen zu können, z.B. weil es in ein nichtleitendes Material eingebettet ist, oder weil die Umgebung dies nicht zuläßt bzw. die Bewegungen des Meßobjektes zu schnell sind. Insbesondere wünscht man hierbei eine Aussage über die Abmessungen bzw. die Relativlage des Meßobjektes (zur Meßanordnung) oder auch über die Masse des zu vermessenden Objekts.

Ein derartiges Problem tritt bei der Überprüfung von Fördergurten auf, wie sie z.B. im Bergbau eingesetzt werden. Derartige Förderbänder weisen oft eine Gesamtlänge von mehreren Tausend Metern auf und dienen nicht nur zum Materialtransport, sondern werden auch von den Bergleuten zum Personentransport benutzt. Diese Fördergurte weisen eine in ein elastisches Material im wesentlichen nach außen dicht eingegossene Stahlarmierung auf, welche die Zugkräfte aufnimmt. Durch die extrem aggressiven Umweltbedingungen (hohe Temperaturen, Feuchtigkeit) sowie die enorme Belastung durch die Zugkräfte und das Verwalken etc. ergeben sich im Laufe der Betriebsdauer feine Risse im elastischen Material, so daß die Stahlarmierung den korrodierenden Einflüssen unterworfen wird. Somit ist zumindest eine regelmäßige Überprüfung der Gurte, die zudem gewaltige Investitionswerte darstellen, unumgänglich, eine kontinuierliche Überprüfung wäre wünschenswert.

Eine optische Überprüfung ist hier nicht möglich, da die Fördergurte nicht nur sehr lang sind, sondern die Förderung während der Überprüfung auch nicht gestoppt werden kann. Darüberhinaus sind nur sehr grobe Fehlstellen im Band äußerlich erkennbar, während bereits gefährliche innere Fehlstellen noch unsichtbar sein können.

Bisher wurde vorgeschlagen, die Überprüfung mittels Röntgenstrahlen durchzuführen, wobei dann das Röntgenbild wieder optisch ausgewertet werden kann. Dieses Verfahren ist jedoch extrem aufwendig und teuer und darüberhinaus unter Tage aufgrund der Schlagwettergefahr nur sehr bedingt einsetzbar.

Bei einem weiteren vorgeschlagenen Verfahren bedient man sich induktiver Wegmeßsysteme, wobei es jedoch bei mehreren Meßkanälen zu deren gegenseitiger Störung kommt. Weiterhin erzeugen magnetisierte Stellen in den Armierungsseilen, die unvermeidbar sind, Fehlmessungen, was wiederum eine zuverlässige Beurteilung detektierter tatsächlicher Fehler in der Armierung unzuverlässig macht. Darüberhinaus ist der Dynamikbereich bei dieser Meßmethode zwangsläufig relativ gering, so daß es an den Spleiß-oder Verbindungsstellen der Gurte, die eine gegenüber dem übrigen Gurt wesentlich erhöhte Metallmasse aufweisen, zu einem Überschreiten des Meßbereichs kommt, wenn an den anderen Meßstellen die Empfindlichkeit groß genug sein soll.

Die Vermessung elektrisch leitfähiger Objekte mittels des Wirbelstromverfahrens ist zwar in vielen Fällen anwendbar, jedoch dann nicht, wenn die elektrisch leitfähigen Objekte wie bei den Fördergurten aus dünnen Einzeladern bestehen, in denen kaum Wirbelströme auftreten. In diesem Fall reduziert sich dieses Verfahren wieder auf eine induktive Messung. Darüberhinaus muß das unvermeidbare Flattern der Fördergurte gegenüber der Sensoranordnung durch eine Dickenmessung eliminiert werden, was den Aufwand wieder wesentlich erhöht.

Bei einem weiteren bekannten Verfahren wird die Stahlarmierung der Fördergurte zuerst entmagnetisiert und dann wieder gleichmäßig magnetisiert. Daran anschließend kann der in eine Sensorspule induzierte Strom gemessen werden, der Aussagen über Risse in der Stahlarmierung oder auch über andere Fehlstellen ermöglicht. Bei diesem Verfahren ist jedoch das Meßsignal in seiner Amplitude von der Geschwindigkeit des an der Sensorspule vorbeistreichenden Objektes abhängig und eine definierte Aussage über die Größe des Schadens (z.B. Materialschwund durch Korrosion) ist nur bedingt möglich. Darüberhinaus ist das anfängliche Entmagnetisieren und danach definierte Magnetisieren des Fördergurtes äußerst umständlich, in Anbetracht der großen Länge der Fördergurte fast unmöglich. Außerdem ist diese Methode nur bei magnetisierbaren Stählen möglich. Es werden in zunehmendem Maße jedoch Seile aus austenitischem Stahl eingesetzt.

Mit demselben Meßprinzip kann auch eine hochauflösende Messung der Eintauchtiefe von Blechen zwischen zwei Spulen realisiert werden, so daß eine genaue Verfolgung von Blechkanten möglich ist.

Bisher wurde dies mit rechnerischen Tastern oder aber optisch gemessen. Induktive Meßsysteme oder nach dem Wirbelstromprinzip arbeitende Sensoren sind hier ungeeignet, weil Lageveränderungen des Bleches in der Höhe, also in der zur eigentlichen Meßrichtung senkrechten Richtung zu großen Meßfehlern führen. Mechanische Taster können nur bei langsamen Bewegungen des Meßobjektes eingesetzt werden. Optische Meßsysteme wiederum sind nur in einer sehr sauberen Umgebung einsetzbar, was im Falle von Metallbearbeitung nie der Fall ist, da dort Staub, Schmiermittel, Kühlwasser u.dgl. immer anfallen.

Ausgehend vom obengenannten Stand der Technik ist es somit Aufgabe der vorliegenden Erfindung, ein Verfahren zum berührungslosen Vermessen elektrisch leitfähiger Objekte derart weiterzubilden, daß mit geringem Aufwand eine hinreichend klare Aussage über die geometrischen Abmessungen bzw. Positionen und/oder Masse des betrachteten Objektes ermöglicht wird.

Diese Aufgabe wird entweder dadurch gelöst, daß man im Meßraum zwischen mindestens einem Sender und mindestens einem Empfänger ein zeitlich konstantes elektromagnetisches Wechselfeld erzeugt, daß man die Feldstärke am Empfänger mißt und den Wert als Bezugswert speichert, daß man das zu vermessende Objekt in den Raum zwischen Sender und Empfänger einbringt, die Feldstärke am Empfänger mißt, den erhaltenen Meßwert mit dem Bezugswert vergleicht und den Vergleichswert zur Anzeige bringt, oder dadurch, daß man im Meßraum zwischen mindestens einem Sender und mindestens einem Empfänger ein zeitlich konstantes elektromagnetisches Wechselfeld erzeugt, daß man in einem Kalibrierschritt das zu vermessende Objekt teilweise in den Meßraum senkrecht zur Feld richtung einführt, daß man die Feldstärke am Empfänger mißt und den Wert als Bezugswert speichert, daß man im Dauer-Meßvorgang den erhaltenen Meßwert mit dem Bezugswert vergleicht und den Vergleichswert zur Anzeige bringt.

Bei beiden erfindungsgemäßen Verfahren wird somit das zu vermessende Objekt zwischen den Sender und den Empfänger gebracht, so daß es den Empfänger gegenüber dem Sender abschirmt. Das elektrisch leitfähige Objekt dämpft das Feld in der Ausbreitungsrichtung. Der Empfänger kann somit die Reduzierung des ohne Dämpfung vorhandenen Feldes messen, wobei die Empfangsleistung bzw. deren Verringerung ein direktes Maß für die Größe der abschirmenden Fläche ist. Wenn das Meßobjekt aus vielen Einzelteilen, z.B. kleinen Metallteilchen wie Körnern, dünnen Drähten usw. besteht oder wenn die Frequenz des Wechselfeldes zur Erzielung einer hohen Eindringtiefe niedrig gewählt wird, kann man zumindest bis zu einer gewissen Dicke der abschirmenden Schicht Aussagen über die zwischen Sender und Empfänger vorhandene Masse erhalten.

Ein weiterer großer Vorteil des erfindungsgemäßen Verfahrens liegt in der guten Linearität des Meßsignals in Abhängigkeit von der abschirmenden Fläche bzw. Masse. Darüberhinaus haben magnetisierte Stellen im Meßobjekt keinen Einfluß auf die Meßergebnisse, da man nur die Wechselfeldstärke mißt.

Es ist also möglich, mit dem erfindungsgemäßen Verfahren entweder das Meßobjekt im wesentlichen vollständig durch den Meßraum laufen zu lassen und Änderungen in seiner Masse - (z.B. Brüche von Einzeldrähten eines Zugseils) zu detektieren, oder aber die Eindringtiefe eines Meßobjektes in den Meßraum, und zwar senkrecht zur Magnetfeldrichtung, zu bestimmen.

Vorzugsweise erzeugt man das elektromagnetische Wechselfeld derart, daß seine Feldstärke über die Normalebene zur Verbindungslinie Sender-Empfänger über eine definierte Fläche im wesentlichen konstant ist. Auf diese Weise erreicht man, daß der Meßwert weitgehend unabhängig vom Abstand des Meßobjektes zum Sender bzw. zum Empfänger ist.

Vorteilhafterweise wird das erfindungsgemäße Verfahren in seiner ersten Form zum Erkennen und/oder Lokalisieren von Fehlerstellen bzw. Ungleichmäßigkeiten in der Stahlarmierung von Fördergurten verwendet. In diesem Fall ist weiterhin als Vorteil zu werten, daß die Messungen bei laufendem Band durchgeführt werden können, daß eine ungleichmäßige Lage der Armierungsseile nebeneinander und geringe Höhenverlagerung -bedingt durch Herstellungstoleranzen-praktisch keine Rolle spielt und auch das Flattern des Bandes die Messung nicht stört. Weiterhin können auch bei hohen Bandgeschwindigkeiten Fehler mit geringen geometrischen Abmessungen (z.B. gekappte Seile) detektiert werden, da man mit hohen Frequenzen arbeiten kann. Magnetisierte Stellen erzeugen bei dem erfindungsgemäßen Verfahren keine Fehlmessungen.

Vorteilhafterweise wird das erfindungsgemäße Verfahren in seiner zweiten Form zum Lokalisieren der Kantenlage eines Meßobjektes, wie etwa eines Bleches od.dgl. senkrecht zur Feldrichtung im Meßraum verwendet. Wesentliche Vorteile liegen hier darin, daß das Meßverfahren eine relativ gute Auflösung auch bei vorhandenem Schmutz, Öl, Staub und Wasser er reichbar macht. Abstandsänderungen oder Bewegungen des Meßobjektes bzw. der Meßkante parallel zur Feldrichtung (also senkrecht zur Meßrichtung) verfälschen das Meßergebnis nicht.

Bei der Vorrichtung zur Durchführung der erfindungsgemäßen Verfahren kann man Sender und Empfänger entweder als Spulen oder als Antennen ausbilden, die in einer Haltevorrichtung fest zueinander montiert sind. Die Haltevorrichtung kann hierbei ein unabhängiges Gerät sein, sie kann auch vom Tragegerüst des Förderbandes (oder einer anderen Einrichtung) gebildet sein. Verwendet man Spulen, so eignen sich Arbeitsfrequenzen von einigen kHz bis zu mehreren MHz, bei der Verwendung von Antennen werden vorteilhafterweise die Wellenlängen im Zentimeterbereich liegen.

Dem Empfänger nachgeschaltet sind die üblichen Demodulatoreinrichtungen, sowie eine Schaltung zum Vergleich mit einem Normalwert bzw. mit einem Nullpunkt. Vorteilhafterweise stellt man bei der Massenbestimmung (erste Form des erfindungsgemäßen Verfahrens) die Schaltung derart ein, daß ohne feldstärkedämpfendes Objekt im Einflußbereich der Spulenanordnung ein Ausgangssignal von Null Volt -kein Meßobjekt vorhanden -ausgegeben wird. Die Verstärkung wählt man hierbei so, daß sich dann, wenn das zu erfassende Objekt seine maximalen Abmessungen aufweist, ein Meßwert von z.B. 1 Volt ergibt. Will man die Kantenlage eines Meßobjektes (Bleches) relativ zur Meßanordnung bestimmen, so stellt man die Schaltung vorteilhafterweise derart ein, daß dann, wenn die Kante des feldstärkedämpfenden Objektes in der Mitte des Meßbereiches (im wesentlichen die Mitte des Meßraumes) angeordnet ist, ein Ausgangs signal von Null Volt -Meßobjekt in Soll-Lageausgegeben wird. Die Verstärkung wählt man hierbei so, daß sich dann, wenn die Kante des Objektes den geforderten Meßbereich zu verlassen beginnt, ein Meßwert von z.B. 1 Volt ergibt.

Bei Verwendung von Spulen als abstrahlende bzw. empfangende Elemente ist es von Vorteil, wenn diese so aufgebaut sind, daß die Flächen im wesentlichen konstanter Feldstärke einen im wesentlichen rechteckigen Querschnitt aufweisen. Dies ist besonders dann von Vorteil, wenn man mehrere abstrahlende bzw. empfangende Elemente (in gleicher Zahl) zu Zeilen zusammenfaßt, wobei die Elemente vorzugsweise mit dem geringstmöglichen Abstand zwischeneinander zusammengeführt sind. Diese Zeilen werden dann quer zur Bewegungsrichtung des Objektes, z.B. des Fördergurtes, angeordnet. Auf diese Weise ist es möglich, große Meßflächen mit dennoch guter Auflösung zu überstreichen, so daß auch die bis zum 160 cm breiten Fördergurte (im Untertagebau) mit hinreichender Auflösung überwacht werden können. Bei derartigen Zeilenanordnungen werden vorzugsweise die Oszillatorfrequenzen zumindest der nebeneinander liegenden Spulen bzw. Antennen unterschiedlich gewählt, wobei den Empfängerelementen Filter od.dgl. nachgeschaltet sind. Auf diese Weise ist gewährleistet, daß nur ein geringes Übersprechen zwischen benachbarten Meßkanälen erfolgt. Derartige Filter können auch in Form Lock-in Verstärkern ausgebildet sein, da die Oszillatorfrequenz ohnehin als Bezugsphase zur Verfügung steht und sich auf diese Weise eine besonders scharfe Filtercharakteristik ergibt.

Vorzugsweise sind den empfangenden Elementen Mittel zum Aufzeichnen bzw. Registrieren der empfangenden Feldstärke nachgeschaltet. Derartige Mittel können z.B. Schreiber sein, mit denen man die Meßsignale nach ihrer zeitlichen Änderung registriert und aufzeichnet, so daß man anhand dieser Kurven Aussagen über Position, Abmessung und Struktur der untersuchten Objekte treffen kann.

Bei einer weiteren bevorzugten Ausführungsform der Erfindung geschieht die Registrierung und Auswertung der Meßsignale dadurch, daß man die Signale zunächst auf elektronische Speichermedien aufzeichnet und dann die Aufzeichnungen mit Hilfe einer Datenverarbeitungsanlage verrechnet, so daß noch exaktere Angaben über Position, Abmessung und Struktur der Objekte getroffen werden können.

Gerade das letztgenannte Aufzeichnungsverfahren bzw. off-line Auswertungsverfahren eignet sich für Vermessung von Fördergurten im Untertagebau besonders gut, da alle untertage gebrachten Anlagen schlagwettergeschützt sein müssen. Man überprüft also vorzugsweise derartige Fördergurte so, daß man eine gegebenenfalls fest installierte Meßvorrichtung in Betrieb nimmt und die Daten über einen (oder mehrere) Durchlauf des Bandes mittels eines tragbaren Speichers aufzeichnet. Die Aufzeichnung wird dann über Tage ausgewertet und zwar derart, daß man die Entfernung gefundener Fehlerstellen von einem Bezugspunkt auf dem Band aufzeichnet und diese Aufzeichnung dann anschließend untertage auf den Fördergurt z.B. über Farbmarkierungen überträgt, so daß anschließend die Reparatur der fehlerhaften Stellen erfolgen kann.

Wenn man die Eindringtiefe eines Meßobjektes in den Meßraum mißt, so ist es von Vorteil, wenn man die Spulen in einem Abstand A voneinander anordnet, der im wesentlichen gleich oder geringfügig größer ist als der Spulendurchmesser. Man kann dann bei ganz einfachen Spulen mit einem Durchmesser von z.B. 2 mm und einem Abstand zwischen Sender-und Empfangsspule von 2 -3 mm eine Ortsauflösung von 0,1 μm erreichen. Der Linearitätsfehler des Meßsignals.liegt trotz der einfachen zylindrischen Spulenform in einem weiten Meßbereich unter 2%.

Der Spulendurchmesser bestimmt den Meßbereich, in welchem für die Eindringtiefe D ein linearer Zusammenhang mit dem Meßsignal besteht. Vorteilhafterweise ist der Spulendurchmesser etwa doppelt so groß wie der gewünschte Meßbereich für die Eindringtiefe des Blechs in den Meßraum.

Im folgenden wird die Erfindung anhand von Ausführungsbeispielen näher beschrieben. Hierbei zeigt:

Fig. 1 A bis 1C Blockschaltbilder verschiedener Ausführungsformen abstrahlender und empfangender Elemente,

Fig. 2 die prinzipielle räumliche Anordnung der abstrahlenden und empfangenden Elemente zum Meßobjekt,

Fig. 3 eine Darstellung ähnlich Fig. 2, jedoch mit über den Meßbereich hinausragenden Meßobjekten,

Fig. 4 Blockschaltbilder einer Zeilenanordnung von Sender und Empfänger,

Fig. 5 die räumliche Anordnung einer Zeilenanordnung, wobei das Meßobjekt ein Fördergurt ist,

Fig. 6 das Meßergebnis einer 3-Sensoranordnung in Abhängigkeit von der Anzahl der Meßobjekte (Seile),

Fig. 7 eine Meßanordnung zur Messung der Eindringtiefe eines Meßobjektes in den Meßraum, und

Fig. 8 das Meßergebnis der Meßanordnung nach Fig. 7.

Im folgenden wird das Grundprinzip der Meßanordnung anhand von Blockschaltbildern erläutert.

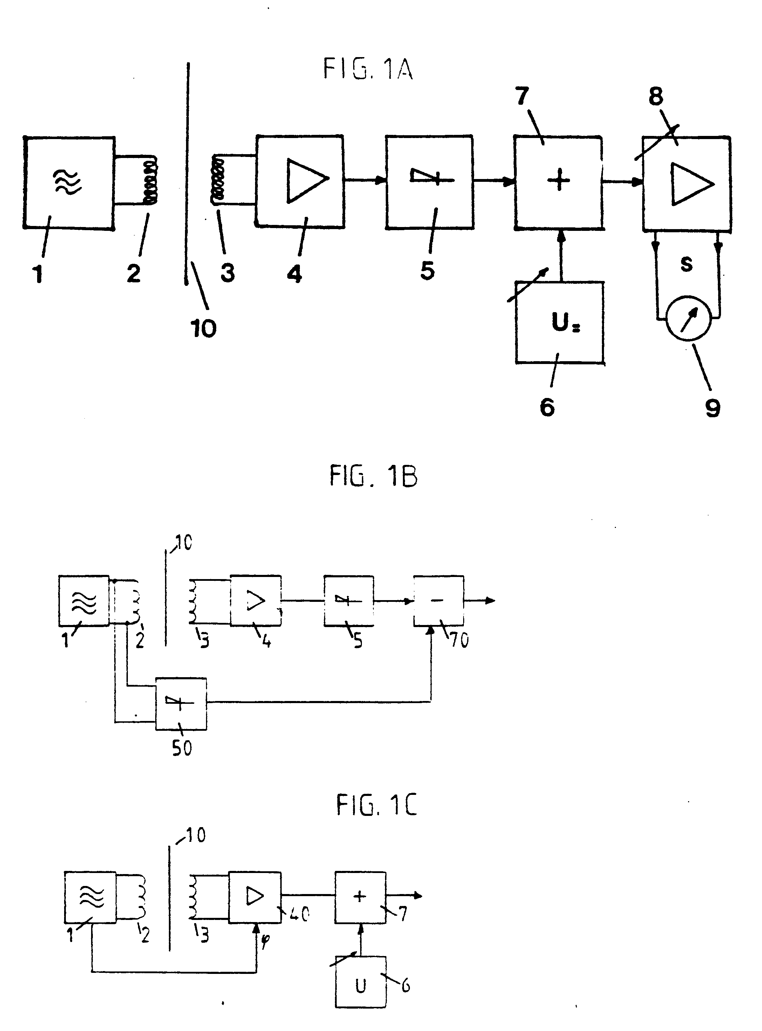

Wie aus Fig. 1 A hervorgeht, speist ein Oszillator 1 eine Sendespule 2, die ein gerichtetes elektromagnetisches Feld erzeugt. Dieses Feld tritt im wesentlichen senkrecht durch ein Meßobjekt 10 hindurch bzw. trifft auf dieses senkrecht auf (in Fig. 1 nicht gezeigt) und tritt in eine Empfangsspule 3 gegenüber dem Meßobjekt 10 ebenfalls im wesentlichen senkrecht ein. In der Empfangsspule 3 wird das magnetische Feld wieder in ein elektrisches Signal umgewandelt und im Verstärker 4 verstärkt.

Aus dem Verstärker 4 gelangt das verstärkte Signal in einen Demodulator 5, der die Wechselspannung in eine der gemessenen Feldstärke proportionale Gleichspannung umwandelt. Das feldproportionale Gleichstromsignal gelangt in eine Additionsschaltung 7, in der eine Gleichspannung aus einer Gleichspannungsquelle zum feldstärkeproportionalen Signal addiert wird. Das Summensignal gelangt schließlich in einen weiteren Verstärker 8 und von diesem an ein Meßinstrument 9. Anstelle des Meßinstrumentes 9 wird bei Dauermessungen ein Schreiber bzw. ein Speicher mit dem verstärkten Summensignal gespeist.

Das von der Senderspule 2 erzeugte elektromagnetische Wechselfeld wird vom mit metallischen Meßobjekt 10 gegenüber der Empfängerspule 3 abgeschwächt, wobei die Abschwächung bei einer gegenüber der Objektdicke großen Eindringtiefe von der abgedeckten Fläche bzw. von der abschirmenden Masse abhängt. Hierbei ist die Abhängigkeit in weiten Bereichen linear proportional zur abschirmenden Masse.

Zur Inbetriebnahme der Vorrichtung geht man folgendermaßen vor: Zunächst werden die Sende- und die Empfangsspule 2 und 3 (bzw. Sende-und Empfangsantennen) in geeigneter Weise fest an einem hier nicht gezeigten Halter befestigt, so daß Sender-und Empfängerspule miteinander fluchten und in ihrem Abstand zueinander konstant gehalten sind. Nach der Installation wird die Ausgangsspannung der Gleichstromquelle 6 derart als negative Spannung zum demodulierten feldstärkeproportionalen Gleichstromsignal addiert, daß das Additionsresultat Null ergibt. Daraufhin führt man ein Meßobjekt 10 zwischen Sender-und Empfängerspule 2, 3 ein, das der maximal zu messenden Masse bzw. der maximal zu messenden Fläche entspricht. Dieses Maximalsignal wird nun mittels des Verstärkers 8 derart kalibriert, daß es eine sinnvolle Endspannung am Meßgerät 9 ergibt, z.B. 1 oder 10 Volt. Dieser Wert entspricht dann 100 % der maximalen oder Sollmasse. Nach diesem Schritt ist die Anordnung bereit zur ersten Messung.

Die Anordnung nach Fig. 1B ist ähnlich der Anordnung nach Fig. 1A ausgebildet, jedoch wird das Gleichstromsignal direkt aus dem Oszillator 1 mittels eines weiteren Demodulators 50 gewonnen. Auf diese Weise ist die Schaltung weitgehend unabhängig von Amplitudenschwankungen des Oszillators 1.

Bei der weiteren, in Fig. 1C gezeigten Ausführungsform der Erfindung, die sich besonders dann eignet, wenn mehrere Sende-und Empfangsanlagen nebeneinander betrieben werden sollen, ist der der Empfängerspule 3 nachgeschaltete Verstarker 40 als Lock-in Verstärker ausgebildet, der das Phasensignal φ vom Oszillator 1 erhält. Auf diese Weise ist eine hohe Störsicherheit gegenüber Signalen anderer Frequenz gewährleistet, zudem ergibt sich eine wesentliche Vergrößerung des Rauschabstandes und damit des Dynamikbereiches, da eine Mittelung (über mindestens eine volle Schwingung) stattfindet. Das Ausgangssignal aus dem Verstärker 40 wird wie oben beschrieben weiterverarbeitet.

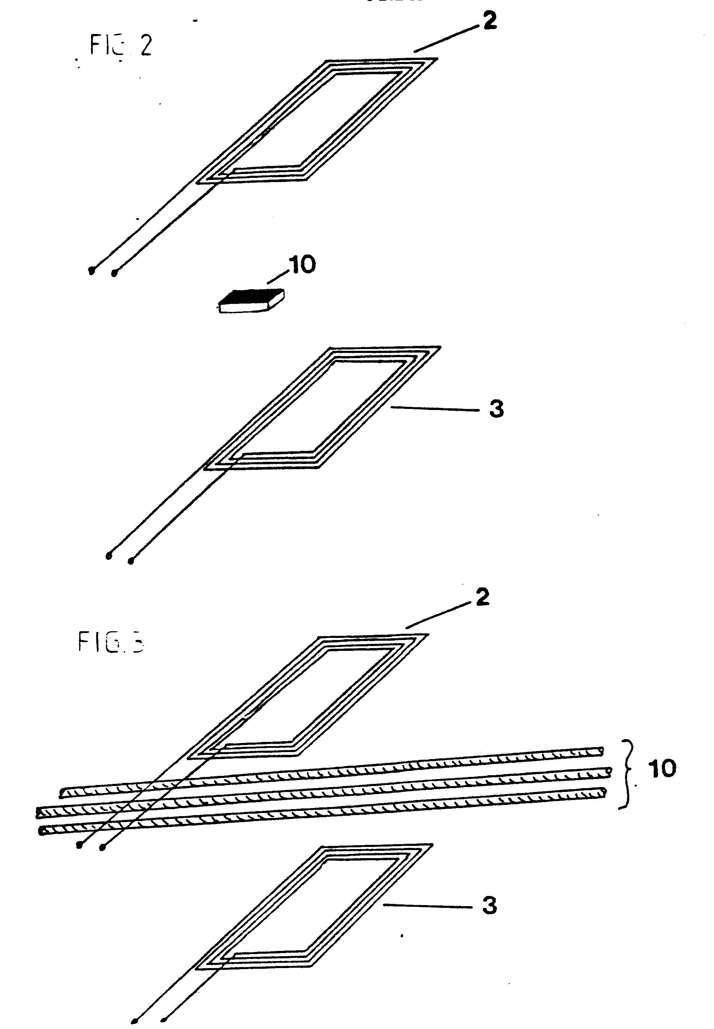

In den Fig. 2 und 3 ist nochmal die räumliche Anordnung der Sendespule zur Empfangsspule 3 und zum Meßobjekt 10 dargestellt. Wie aus Fig. 2 hervorgeht, sind die Spulen vorteilhafterweise rechteckig ausgebildet, so daß sie dem zu vermessenden Objekt angepaßt sind und sich ein linearer Zusammenhang zwischen der Größe bzw. Masse des Meßobjektes 10 und dem Meßsignal ergibt. Wenn, wie in Fig. 2 gezeigt, das Meßobjekt 10 kleiner als die Spulenfläche ist, so kann seine Fläche/Masse insgesamt gemessen werden. Wenn, wie in Fig. 3 gezeigt, das Meßobjekt aus mehreren Einzelstücken (Armierungsseilen) besteht, die in einer Richtung über die Spulenfläche hinausragen, so kann dennoch der innerhalb der Spulenfläche liegende Bereich exakt analysiert werden, wobei man dann das Meßobjekt -die Seile 10 -zwischen den Spulen hindurchzieht bzw. die Spule 2, 3 über das Meßobjekt hinwegstreichen läßt.

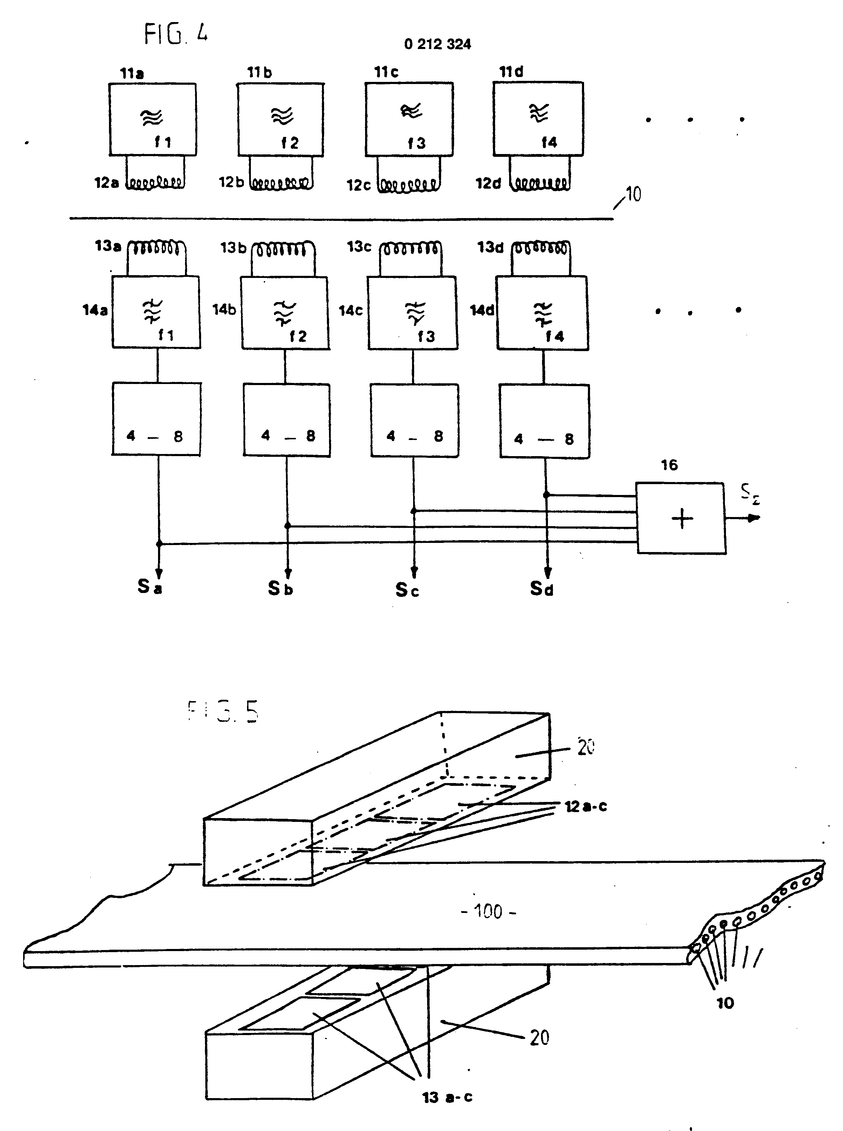

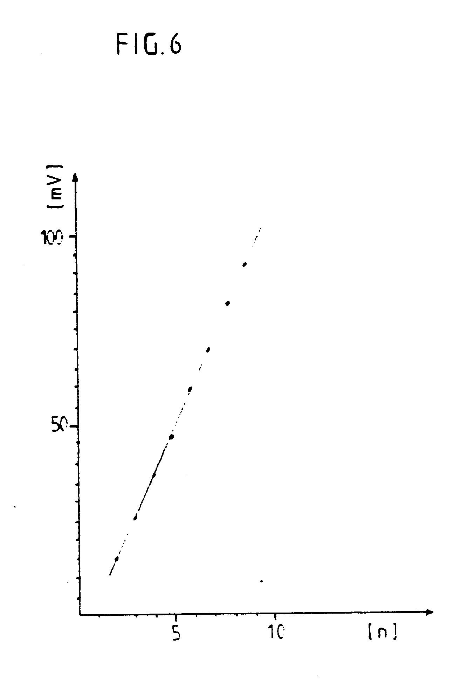

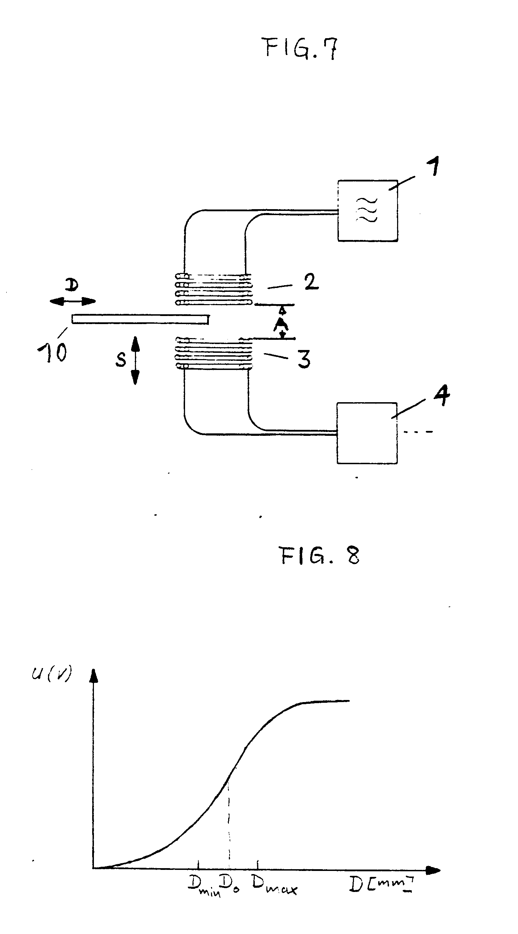

In Fig. 4 ist eine weitere bevorzugte Ausführungsform der Erfindung gezeigt, bei der nebeneinander in einer Zeile mehrere Oszillatoren 11a -11d, Senderspulen 12a -12d, Empfängerspulen 13a -13d usw. angeordnet sind. Das Meßobjekt 10 wird somit abschnittsweise von mehreren, möglichst dicht nebeneinander angeordneten Feldern abgetastet und so abschnittsweise vermessen. Bei dieser Zeilen-Anordnung sind die Verstärker 14a -14d vorteilhafterweise als frequenzselektive Verstärker augebildet, die Oszillatoren 11a -11d senden bei verschiedenen Frequenzen $f_1$ -$f_4$. Insbesondere sind die Sendefrequenzen von zwei zueinander benachbarten Oszillatoren 11/Verstärkern 14 voneinander verschieden. Auf diese Weise wird eine große Kanaltrennung erreicht, ohne daß zusätzliche Abschirmmaßnahmen notwendig wären. Selbstverständlich sind auch andere Schaltungsmaßnahmen mit Vorteil verwendbar, wie sie z.B. bei der Beschaltung von Mehrkanaltonbandgeräten zur Verbesserung der Kanaltrennung möglich sind. Durch diese Schaltungsanordnungen ist gewährleistet, daß in den einzelnen Empfängern nur das Feld des entsprechenden Sensorpaares ausgewertet wird, während schräg einfallende Signale keinen Einfluß auf die Messung haben. Dies ist für ein lineares Verhalten der gesamten Anordnung und für eine exakte Lokalisierung von Strukturen von entscheidender Bedeutung.

Vorzugsweise wird auch aus den einzelnen Meßsignalen Sa -Sd ein Summensignal $S_\epsilon$ gebildet, das einen Überblick über größere Meßflächen ermöglicht.

In Fig. 5 ist eine Sensor-Zeilenanordnung der zuvor beschriebenen Art in ihrem mechanischem Aufbau gezeigt, wobei das Meßobjekt ein Fördergurt 100 ist, in den Stahlseile 10 in Längsrichtung als Armierung eingelagert sind. Die Senderspulen 12a -12c sind hierbei in den einen Teil einer zweiteiligen Haltevorrichtung 20 eingebaut, die Empfängerspulen 13a -13c in den anderen Teil der Haltevorrichtung 20. Die Haltevorrichtung 20 gewährleistet den konstanten Abstand der abstrahlenden zu den empfangenden Spulen. Selbstverständlich ist es in diesem Fall auch möglich, die Haltevorrichtung 20 in Richtung der Sensorzeile hin-und herzubewegen, so daß bei den geeigneten, bekannten Auswertemethoden mit einem größeren Sensorabstand zur Erweiterung des Meßbereiches gearbeitet werden kann.

In Fig. 6 ist eine Meßreihe gezeigt, die mit drei Paaren von Empfänger-/Senderspulen gewonnen wurde. Hierbei ist das Summensignal gegenüber der Anzahl n von Stahlseilen gemessen, die in konstanten Abständen nebeneinander gelegt wurden. Die Sende-und Empfangsspulen sind hierbei rechteckförmig, die Spulenflächen liegen parallel zueinander. Aus der Darstellung geht deutlich hervor, daß der erhaltene Summen-Meßwert der Anzahl der eingebrachten Seile und damit der detektierten Masse mit einer sehr guten Linearität folgt.

Es wurden weiterhin Messungen mit gekappten Seilen vorgenommen, wobei diese Seile entweder auf Stoß oder mit einem gewissen Abstand zueinander angeordnet waren. Beim Durchfahren der Seile in Seillängsrichtung durch den Sensorbereich sind auch derartige "Fehler" ausgezeichnet zu detektieren.

Die Wahl der Arbeitsfrequenz ist einerseits abhängig von der minimal zulässigen oberen Grenzfrequenz des Meßsignals, d.h. von der Geschwindigkeit, mit der sich das Meßobjekt im Detektionsbereich relativ zum Sensorpaar bewegt, anderseits von der Größe des zu detektierenden Fehlers, bzw. der zu detektierenden Struktur. Da bekanntermaßen die Eindringtiefe in elektrisch leitfähigen Materialen abhängig von der Frequenz ist, ist hierbei noch die Dicke des Meßobjektes zu berücksichtigen. Soll also die vorhandene Masse erfaßt werden, so ist eine möglichst niedrige Arbeitsfrequenz zu wählen, um auch mit der Dicke des Meßobjektes eine Signalveränderung zu erhalten. Im Falle der Vermessung von Fördergurten muß man mit Geschwindigkeiten des Meßobjektes (der Fördergurte) von mehreren Metern pro Sekunde rechnen, die Signalfrequenz geht dann etwa bis 1 kHz und die Arbeitsfrequenz sollte in diesem Fall somit bei etwa 10 kHz liegen, um noch eine verwertbare Signalform zu erhalten. Nach oben hin sind Frequenzen bis zu mehreren 100 kHz (je nach Dicke der Armierungsseile) anwendbar. Wenn jedoch nur eine abschirmende Fläche detektiert werden soll, so können auch höhere Frequenzen verwendet werden.

Bei einer anderen, hier nicht gezeigten bevorzugten Ausführungsform der Erfindung werden, wie eingangs erwähnt, statt der Sende-und Empfangsspulen Antennen, z.B. Dipolantennen verwendet, wobei dann die Wellenlängen im Zentimeterbereich liegen.

Bei dem in Fig. 7 gezeigten Ausführungsbeispiel der Erfindung speist ebenfalls ein Oszillator 1 eine Sendespule 2, die ein gerichtetes elektromagnetisches Feld erzeugt. Der Sendespule 2 gegenüber ist eine Empfangsspule 3 symmetrisch zur Sendespule 2 angeordnet. Die Empfangsspule 3 steht mit der bereits vorher beschriebenen Anordnung bestehend aus Verstärker 4 usw. in leitender Verbindung.

Mit dieser Anordnung kann die Eindringtiefe D eines Meßobjektes 10 in den Raum zwischen Sende-und Empfangsspule 2, 3 bestimmt werden und zwar aufgrund einer Bestimmung der Kantenlage des Meßobjektes 10, z.B. eines Bleches. Die Eindringtiefe D ist hierbei so definiert, daß ihre Richtung senkrecht zur Verbindungslinie der Spulenmitten, also senkrecht zum Magnetfeld liegt.

Mit der in Fig. 7 gezeigten Anordnung läßt sich das in Fig. 8 schematisch dargestellte Meßergebnis erzielen, bei dem in Vertikalrichtung die Ausgangsspannung (U, V) der Meßanordnung, in der horizontalen die Eindringtiefe D aufgetragen ist. Der Punkt $D_0$ bezeichnet den Mittelpunkt des Linearitätsbereiches zwischen den Extremwerten $D_{min}$ und $D_{max}$. Bei einer entsprechenden Wahl dieses Meßbereiches läßt die Anordnung Linearitätsfehler von unter 2% zu -insbesondere kann hier durch (an sich bekannte) Linearisierungsschaltungen der Linearitätsbereich weiter vergrößert werden.

Das Meßprinzip ist also auch hier das gleiche, es dreht sich nämlich im wesentlichen um die Abschirmwirkung eines elektrisch leitenden Objektes, die gemessen wird.

Selbstverständlich läßt sich mit einer Anordnung wie in den Fig. 4 und 5 im Prinzip dargestellt der Meßbereich auch für die Messung der Eindringtiefe entsprechend erweitern.

Weiterhin ist es möglich, die beiden vorgestellten Messungen insofern zu vereinen, als nicht nur die Masse eines Meßobjektes bestimmt wird, sondern auch dessen Lage im Raum, wobei auch hier der große Vorteil auftritt, daß eine Verschiebung des Meßobjektes senkrecht zur gewünschten Meßrichtung, also in Richtung der Spulen-/Antennen-Verbindungslinie keinen Einfluß auf das Meßergebnis hat.

**Ansprüche**

1. Verfahren zum berührungslosen Vermessen elektrisch leitfähiger Objekte innerhalb eines Meßraumes, dadurch **gekennzeichnet**, daß man im Meßraum zwischen mindestens einem Sender und mindestens einem Empfänger ein zeitlich konstantes elektromagnetisches Wechselfeld erzeugt,

daß man die Feldstärke am Empfänger mißt und den Wert als Bezugswert speichert,

daß man das zu vermessende Objekt in den Raum zwischen Sender und Empfänger einbringt, die Feldstärke am Empfänger mißt, den erhaltenen Meßwert mit dem Bezugswert vergleicht und den Vergleichswert zur Anzeige bringt.

2. Verfahren zum berührungslosen Vermessen elektrisch leitfähiger Objekte innerhalb eines Meßraums,

dadurch **gekennzeichnet**, daß man im Meßraum zwischen mindestens einem Sender und mindestens einem Empfänger ein zeitlich konstantes elektromagnetisches Wechselfeld erzeugt,

daß man in einem Kalibrierschritt das zu vermessende Objekt teilweise in den Meßraum senkrecht zur Feldrichtung einführt,

daß man die Feldstärke am Empfänger mißt und den Wert als Bezugswert speichert,

daß man im Dauer-Meßvorgang den erhaltenen Meßwert mit dem Bezugswert vergleicht und den Vergleichswert zur Anzeige bringt.

3. Verfahren nach Anspruch 1 oder 2,

dadurch **gekennzeichnet**, daß man das elektromagnetische Wechselfeld derartig erzeugt, daß dessen Feldstärke über die Normalebene zur Verbindungslinie Sender-Empfänger über eine definierte Fläche im wesentlichen konstant ist.

4. Verwendung des Verfahrens nach Anspruch 1 zum Erkennen und/oder Lokalisieren von Fehlerstellen bzw. Ungleichmäßigkeiten in der Stahlarmierung von Fördergurten.

5. Verwendung des Verfahrens nach Anspruch 2 zum Erkennen und Lokalisieren der Kantenlage eines Meßobjektes, wie etwa eines Bleches od.dgl., senkrecht zur Feldrichtung im Meßraum.

6. Vorrichtung zur Durchführung des Verfahrens nach einem der Ansprüche 1 bis 5 mit mindestens einem Sender und mindestens einem Empfänger für elektromagnetische Felder,

dadurch **gekennzeichnet**, daß jeder Sender und jeder Empfänger als abstrahlendes bzw. empfangendes Element eine Spule (2, 3) umfaßt, wobei die Spulen (2, 3) in einer Haltevorrichtung (20) zueinander fluchtend montiert sind und im wesentlichen gleiche Flächen normal zur Spulenachse aufweisen.

7. Vorrichtung zur Durchführung des Verfahrens nach Anspruch 1 bis 5 mit mindestens einem Sender und mindestens einem Empfänger für elektromagnetische Felder,

dadurch **gekennzeichnet**, daß jeder Sender und jeder Empfänger als abstrahlendes bzw. empfangendes Element eine Antenne umfaßt, wobei die Antennen in einer Haltevorrichtung zueinander fluchtend montiert sind und im wesentlichen die gleichen Abstrahl-/Empfangsflächen normal zu ihrer Verbindungslinie aufweisen.

8. Vorrichtung nach Anspruch 6,

dadurch **gekennzeichnet**, daß die Spulen (2, 3) derart aufgebaut sind, daß die Flächen im wesentlichen konstanter Feldstärke einen im wesentlichen rechteckigen Querschnitt aufweisen.

9. Vorrichtung nach einem der Ansprüche 6 bis 8,

dadurch **gekennzeichnet**, daß mehrere abstrahlende bzw. empfangende Elemente (2, 3) zu Zeilen, vorzugsweise mit geringst möglichem Abstand zwischen den Elementen (2, 3) zusammengefügt sind und daß die Zeilen quer zur Relativbewegungsrichtung zwischen Objekt und Zeile angeordnet sind.

10. Vorrichtung nach Anspruch 9,

dadurch **gekennzeichnet**, daß die abstrahlenden Elemente (12a -12d) mit Oszillatoren (11a -11d)

verschiedener Oszillationsfrequenzen (f, -f₄) verbunden sind, und daß den entsprechenden empfangenden Elementen (13a -13d) Filtermittel (14a -14d) mit darauf jeweils abgestimmten Durchlaßfrequenzbändern (f, -f₄) nachgeschaltet sind.

11. Vorrichtung nach einem der Ansprüche 9 oder 10

, dadurch **gekennzeichnet**, daß die empfangenden Elemente (3, 13) mit Mitteln zum Aufzeichnen bzw. Registrieren der empfangenden Feldstärke verbunden sind.

12. Vorrichtung nach Anspruch 6,

dadurch **gekennzeichnet**, daß man die Spulen (2, 3) in einem Abstand voneinander anordnet, der im wesentlichen gleich oder geringfügig größer ist als der Spulendurchmesser.

13. Vorrichtung nach Anspruch 12,

dadurch **gekennzeichnet**, daß man den Durchmesser der Spulen (2, 3) etwa doppelt so groß wählt wie den gewünschten Meßbereich für die Eindringtiefe (D) des Bleches (10) in den Meßraum.

FIG. 1A

FIG. 1B

FIG. 1C

FIG 2

FIG.3

FIG. 4

0 212 324

FIG. 5

FIG.6

FIG. 7

FIG. 8